# EUROPEAN PATENT SPECIFICATION

(11) **EP 3 335 912 B1**
(45) Date of publication and mention of the grant of the patent: **30.10.2019**
(21) Application number: 17207273.8
(22) Date of filing: 14.12.2017
(51) Int. Cl.: B60C 11/24

(54) **TIRE WITH MAGNETIC TREAD DETECTION**
REIFEN MIT MAGNETISCHER LAUFFLÄCHENERKENNUNG
PNEU DOTÉ DE DÉTECTION DE BANDE DE ROULEMENT MAGNÉTIQUE

(30) Priority: 15.12.2016 US 201662434777 P
(43) Date of publication of application: 20.06.2018
(73) Proprietor: Bridgestone Americas Tire Operations, LLC, Nashville, TN 37201 (US)
(72) Inventor: Wei, Terence E, Copley, OH 44321 (US); Agarwal, Sheel P, Solon, OH 44139 (US)
(74) Representative: Lamb, Martin John Carstairs

(56) References cited:
- EP-A1- 1 512 557
- WO-A1-2016/109108
- WO-A1-2016/200507
- DE-A1-102015 207 381
- US-A1- 2001 021 729
- US-A1- 2009 078 347

## Description

### FIELD OF INVENTION

This disclosure relates to structures and methods used to notify a driver, passenger, or other observer that a tire tread has worn to a predetermined limit. More particularly, the disclosure relates to tires including at least one belt having magnetic properties, tires including at least one package having magnetic particles and an erodible medium, and methods for detecting tread wear that pertain to tires including at least one belt having magnetic properties or tires including at least one package having magnetic particles and an erodible medium.

### BACKGROUND

Structures and methods for gauging tread wear are known. For example, tread wear indicators provide a visual indication that a tire tread has worn to a predetermined limit, and the "penny test" (*i.e*., inserting a penny into a groove to measure the height of a tread element relative to a feature of the coin) and direct measurements have been used to ascertain tread depth. These structures and tests require physical observation (when the tire is stationary) in order to determine the tread depth. Attention is drawn to the disclosure of US 2009/0078347A and DE 102015207381A.

### SUMMARY OF THE INVENTION

In one aspect of the invention, a tire is provided as claimed in claim 1.

In another aspect of the invention, method for detecting tread wear is provided as claimed in claim 11.

[DELETED]

### BRIEF DESCRIPTION OF THE DRAWINGS

In the accompanying drawings, structures are illustrated that, together with the detailed description provided below, describe exemplary embodiments of the claimed invention. Like elements are identified with the same reference numerals. It should be understood that elements shown as a single component may be replaced with multiple components, and elements shown as multiple components may be replaced with a single component. The drawings are not to scale and the proportion of certain elements may be exaggerated for the purpose of illustration.
**Figure 1** is a peel-away cross-sectional perspective view of an embodiment (which is not according to the present invention) of a pneumatic tire including a belt having magnetic properties;
**Figure 2a** is a peel-away cross-sectional perspective view of an embodiment of a pneumatic tire including a plurality of packages comprising magnetic particles and an erodible medium;
**Figure 2b** is a front cross-sectional view of the tire including at least one package comprising magnetic particles and an erodible medium, as shown in **Figure 2a**;
**Figure 2c** is a front cross-sectional view of an alternative embodiment of the tire including at least one package comprising magnetic particles and an erodible medium, as shown in **Figure 2b**;
**Figure 3** is a perspective view of a package comprising magnetic particles and an erodible medium;
**Figure 4a** is a side cross-sectional view of one embodiment (which is not according to the present invention) of a non-pneumatic tire including a belt having magnetic properties;
**Figure 4b** is a side cross-sectional view of an alternative embodiment of a non-pneumatic tire including at least one package comprising magnetic particles and an erodible medium;
**Figure 5** is a flowchart describing one embodiment of a method (which is not according to the present invention) for detecting tread wear in a tire including at least one belt having magnetic properties; and
**Figure 6** is a flowchart describing an alternative embodiment of a method for detecting tread wear in a tire including a plurality of packages comprising magnetic particles and an erodible medium.

### DETAILED DESCRIPTION

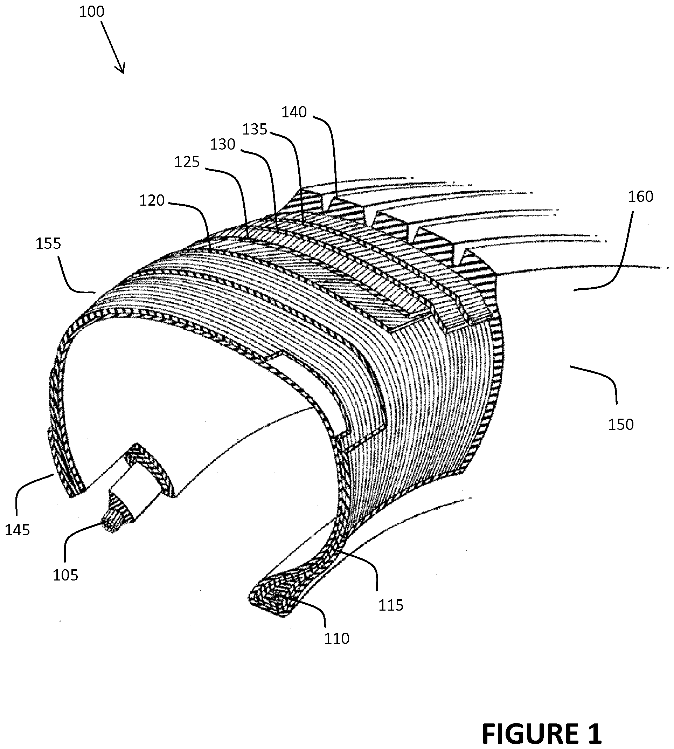

**Figure 1** (which is not according to the present invention, but which is useful for understanding the present invention) is a peel-away cross-sectional perspective view of an embodiment of a pneumatic tire **100** including a belt having magnetic properties.

As shown, tire **100** includes a first annular bead **105** and a second annular bead **110.** The annular beads, in part, secure the tire to a wheel. In an alternative embodiment (not shown), the tire comprises four or more beads.

Tire **100** further includes a body ply **115** extending between first annular bead **105** and second annular bead **110.** Body ply **115** forms an annulus and imparts shape to the tire. As one of ordinary skill in the art will understand, body ply **115** may contain reinforcing cords (not labeled) or fabric (not shown). In alternative embodiments (not shown), various turn-up and turn-down configurations, or multiple body plies, are used.

Tire **100** further includes an annular belt package which comprises a first annular belt **120** and a second annular belt **125.** First annular belt **120** is disposed radially upward of body ply **115** and extends axially across a portion of body ply **115.** Second annular belt **125** is disposed radially upward of first annular belt **120** and extends axially across a portion of body ply **115.** As one of ordinary skill in the art will understand, the annular belts may contain steel cords and reinforcing cords (both not shown). In an alternative embodiment (not shown), the belt package includes a third annular belt.

In tire **100,** as circumferential tread **140** (discussed further below) wears due to use, at least one of the annular belts will become closer to the tread surface. As the belt (or belts) moves relatively closer to the tread surface, the magnetic field produced by the belt will appear stronger to a magnetometer placed at the tread surface, thus indicating that the tire is worn. In an alternative embodiment, the tire is driven over a surface that contains a magnetometer. In another alternative embodiment, the magnetometer is mounted on a car (such as in a wheel well).

Although not shown in **Figure 1****,** at least one of the annular belts in the annular belt package produces a magnetic field. In one embodiment, a single annular belt having magnetic properties produces a static magnetic field of 4.0-16.0 mT when measured from the tread surface. In an alternative embodiment, a single annular belt having magnetic properties produces a static magnetic field of 4.0-16.0 mT when measured from the tread surface. In another embodiment, two or more annular belts produce a static magnetic field.

As one of ordinary skill in the art will understand, the annular belts produce a static magnetic field due, in part, to their ferromagnetic properties. Exemplary suitable materials include cords made of carbon steel or alloy steel. In one embodiment, all of the metallic cords in an annular belt are magnetic. In an alternative embodiment, a fraction of the metallic cords in an annular belt are magnetic.

With continued reference to **Figure 1****,** tire **100** further comprises a first cap ply **130** and a second cap ply **135.** First cap ply **130** is disposed radially above first annular belt **120** and second annular belt **125,** and extends axially across a portion of body ply **115.** Second cap ply **135** is disposed radially above first cap ply **130,** and extends axially across a portion of body ply **115.** In an alternative embodiment (not shown), a sealing gel layer is provided in the cap ply region.

Tire **100** further comprises a circumferential tread **140.** Circumferential tread **140** is disposed radially upward of second cap ply **135** (and the belt package) and extends axially across a portion of body ply **115.** The width of the circumferential tread **135** is known as the tread width. As depicted, four circumferential grooves divide circumferential tread **140** into five ribs. As one of ordinary skill in the art will understand, a circumferential tread may contain additional elements such as, without limitation, axial grooves, sacrificial ribs, sipes, stone ejectors, and tie bars. As one of ordinary skill in the art will also understand, the circumferential tread is affixed to the tire (*e.g.,* by vulcanization) when the tire is new. In an alternative embodiment (not shown), the circumferential tread is affixed as a retread.

Tire **100** further comprises a first sidewall **145** and a second sidewall **150.** First sidewall **145** extends between the first annular bead **105** and a first shoulder **155,** which is proximately associated with an edge of circumferential tread **140.** Second sidewall **150** extends between the second annular bead **110** and a second shoulder **160,** which is proximately associated with an opposite edge of circumferential tread **140.** In alternative embodiments (not shown), the sidewall includes one or more sidewall protector(s), electronic device(s), and/or cooling fin(s). In a particular alternative embodiment, the tire further comprises an RFID chip configured to record data associated with a tread-depth measurement.

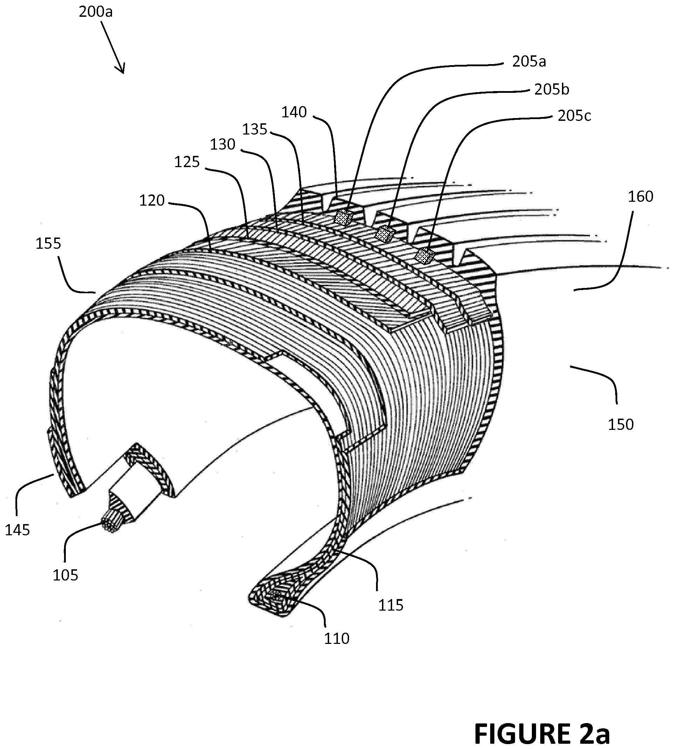

**Figure 2a** is a peel-away cross-sectional perspective view of an embodiment of a pneumatic tire **200a** including at least one package comprising magnetic particles and an erodible medium. The **Figure 2a** embodiment is substantially similar to the **Figure 1** embodiment, except for the differences discussed below. Like numerals are used to indicate like components.

Tire **200a,** in contrast to tire **100,** includes an annular belt package that produces a static magnetic field less than 600 µT. In one particular embodiment, the annular belt package produces a static magnetic field less than 400 µT.

In addition, tire **200a** further includes packages **205a, 205b,** and **205c,** which comprise magnetic particles and an erodible medium. As shown in **Figure 2a****,** packages **205a, 205b,** and **205c** are disposed radially above second cap ply **135,** on a common axial line. In an alternative embodiment (not shown), the packages are distributed about the tire circumference.

Although not shown, the packages contain magnetic particles which are distributed along a gradient of increasing concentration. In one embodiment, the higher concentration portion of the package is disposed closer to the tread surface. In an alternative embodiment, a lower concentration portion of the package is disposed closer to the tread surface.

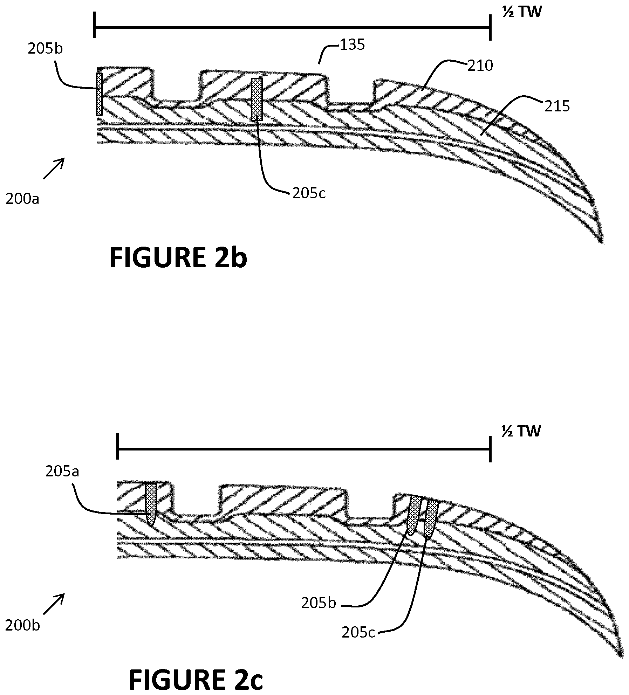

**Figure 2b** is a front cross-sectional view of tire **200a** as shown in **Figure 2a****.** In this embodiment, packages **205b** and **205c** are disposed within circumferential tread **140.** In **Figure 2b****,** circumferential tread **140** further includes a tread cap **210** and a tread base **215.** Tread base **215** is disposed radially upward of the second cap ply and the belt package (both not shown) and extends axially across a portion of body ply (also not shown). Tread cap **210** is disposed radially upward of tread base **215** and extends axially across a portion of body ply. Tread cap **210** may be formulated to possess particular performance attributes that are desirable when the tire is new. As one of ordinary skill in the art will understand, the tread cap and tread base are normally made of different compounds. In alternative embodiment, the tread is made of one compound.

As shown in **Figure 2b****,** packages **205b** and **205c** are disposed in the tread base **215** and extend into tread cap **210.** In an alternative embodiment (not shown), at least one package extends to the tread surface when the tire is new. In another alternative embodiment, at least one package extends across 50-100% of a rib width.

**Figure 2c** is a front cross-sectional view of alternative embodiment of a tire **200c** including at least one package comprising magnetic particles and an erodible medium as shown in **Figure 2b****.** The **Figure 2c** embodiment is substantially the same as the **Figure 2b** embodiment, except for the differences discussed below. Like reference numerals are used to indicate like components.

In this embodiment, packages **205b** and **205c** are disposed in the outer third of tire **200b.** In alternative embodiments, additional packages are disposed at different axial locations across the tire. As one of ordinary skill will understand, the packages may be used in a variety of tire constructions.

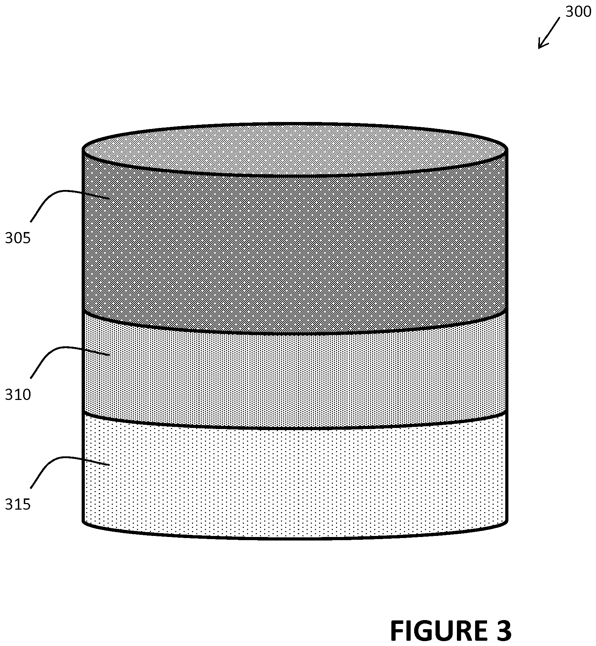

**Figure 3** is a perspective view of an embodiment of a package **300** comprising magnetic particles and an erodible medium. The package **300** is substantially similar to the packages shown in **Figures 2a-2c****,** except for the differences discussed below.

As shown in **Figure 3****,** package **300** contains a first tier **305,** a second tier **310,** and a third tier **315.** First tier **305** includes magnetic particles that produce a magnetic field of 12-16 mT, second tier **310** includes magnetic particles that produce a magnetic field of 8-12 mT, and a third tier **315** includes magnetic particles that produce a magnetic field of 4-8 mT. In an alternative embodiment (not shown), the first tier includes magnetic particles at a concentration of 5-6 g/cm³, the second tier includes magnetic particles at a concentration of 4-5 g/cm³, and the third tier includes magnetic particles at a concentration of 3-4 g/cm³.

Although not shown in **Figure 3****,** the magnetic particles may be made of the group consisting of SrFe₁₂O₁₉, amorphous Fe_{73.5}Cu₁Nb₃Si_{13.5}B₉ or Sm₂Fe₁₄B and La₂Fe₁₄B. The magnetic particles may have a density between 3.5 and 5.1 g/cm³. In another aspect of this embodiment, the magnetic particles have a diameter between 0.5 and 1.0 µm.

In tire embodiments that use packages containing magnetic particles, as the tread wears due to use, magnetic particles will erode from the tire, and the strength of the magnetic field emitted from the package will decrease. In one embodiment, the magnetic field is monitored with a magnetometer, which is placed against the surface of the tread. In an alternative embodiment, the tire is driven over a surface that contains a magnetometer. In another alternative embodiment, the magnetometer is mounted on a car (such as in a wheel well).

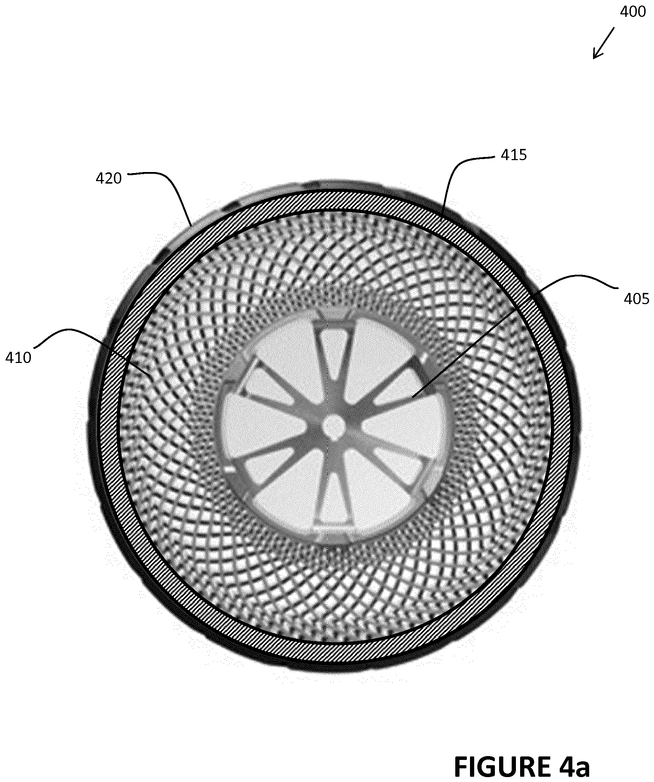

**Figure 4a** is a side cross-sectional view of a tire **400** including a magnetic belt **415.** As shown, tire **400** is a non-pneumatic tire, with wheel **405,** spokes **410,** and tread **420** shown for context. Magnetic belt **415** is disposed radially between spokes **410** and tread **420.** As tread **420** wears due to use, magnetic belt **415** will become closer to the tread surface. As the magnetic belt is closer to the tread surface, the magnetic field will appear stronger to a magnetometer placed at the tread surface, thus indicating that the tire is worn.

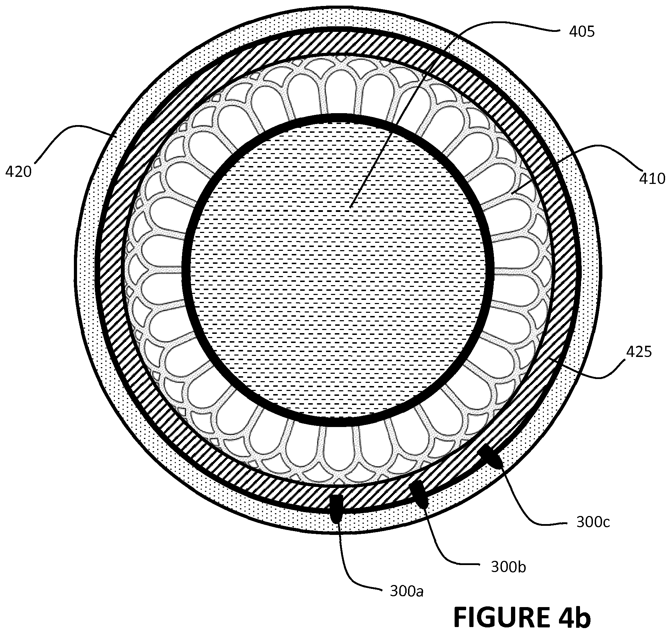

**Figure 4b** is a side cross-sectional view of an alternative embodiment of a tire including a band **425.** The **Figure 4b** embodiment is substantially the same as the **Figure 4a** embodiment, except for the differences discussed below. Like reference numerals are used to indicate like components.

As shown in **Figure 4b****,** packages **300a, 300b,** and **300c** extend from band **425** into tread **420.** In the illustrated embodiment, the packages are disposed within one quadrant of the tire. In one alternative embodiment (not shown), the packages extend from the tread surface into the tread. In another alternative embodiment, the packages are distributed in disparate quadrants.

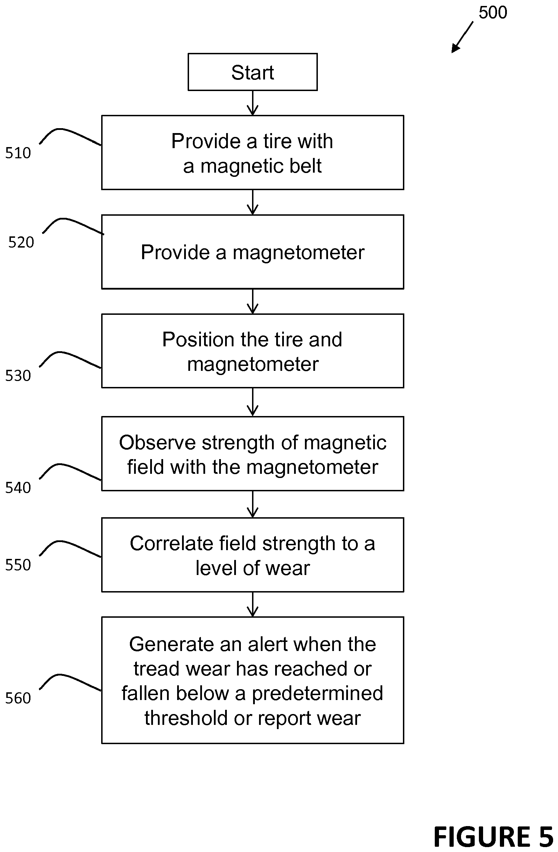

**Figure 5** is a flowchart describing one embodiment of a method 500 of detecting tread wear in a tire including at least one belt having magnetic properties.

As depicted in **Figure 5****,** method **500** starts with providing a tire with a magnetic belt **510** and separately providing a magnetometer **520.** Providing step **510** and providing step **520** may be performed concurrently or independently. In providing step **510,** a tire is mounted on a wheel, a vehicle having a mounted tire is provided, or a tire mounted on a wheel is presented for measurement. In providing step 520, a magnetometer is presented (e.g., as a handheld sensor) to take a measurement, a magnetometer is mounted on a vehicle, or a magnetometer is provided on a floor surface.

In one embodiment, the magnetometer has a sensitivity of at least 0.01 mT. In another embodiment, the magnetometer has a sensitivity of at least 0.001 mT.

In connection with providing step **510** and providing step **520,** a user or machine positions the tire and magnetometer **530** within proximity of each other. In one embodiment, the tire is positioned by driving it over a surface that contains the magnetometer. In another embodiment, the magnetometer is positioned by placing it in contact with the tire. In a different embodiment, the magnetometer is mounted on a car (such as in a wheel well).

Once providing step **510,** providing step **520,** and positioning step **530** are performed, the strength of the magnetic field is measured **540** using the magnetometer. In one embodiment, the measurement is displayed on the magnetometer. In another embodiment, the measurement is transmitted to a digital device. In yet another embodiment, the measurement is recorded on an RFID chip.

After measuring step **540** is completed, the measurement is correlated **550** to a level of wear. In correlating step **550,** the strength of the magnetic field is used to estimate the tread depth. Table 1, below, is an exemplary lookup table used to calculate tread wear:

| **Magnetic Field (mT)** | **Tread Depth (mm)** |
|---|---|
| 4.0 | 9 |
| 4.5 | 8 |
| 5.5 | 6 |
| 6.5 | 5 |
| 8.0 | 3 |

In an alternative embodiment of correlating step **550,** the measurement from the magnetometer is compared to an initial measured value corresponding to an initial (unworn) state of the tread. The measurement is then processed along with the initial measured value in an algorithm, which is used to calculate the worn tread depth.

After correlating step **550** is completed, the correlation may be used in generating **560** an alert when the tread wear has reached a predetermined threshold. The generating step **560** may be performed concurrently or independently of positioning step **530,** measuring step **540,** and correlating step **550.**

In generating step **560,** the strength of the magnetic field is compared against a predetermined threshold. If the strength of the magnetic field has reached the threshold, then an alert relating to the worn state is generated. In another embodiment, a wear alert (or report) is generated at regular intervals for maintenance purposes. The alerts (or reports) can include a predication of how much longer the tread can be used. In a different embodiment, a wear alert (or report) is generated at regular intervals for quality assurance and performance tracking purposes.

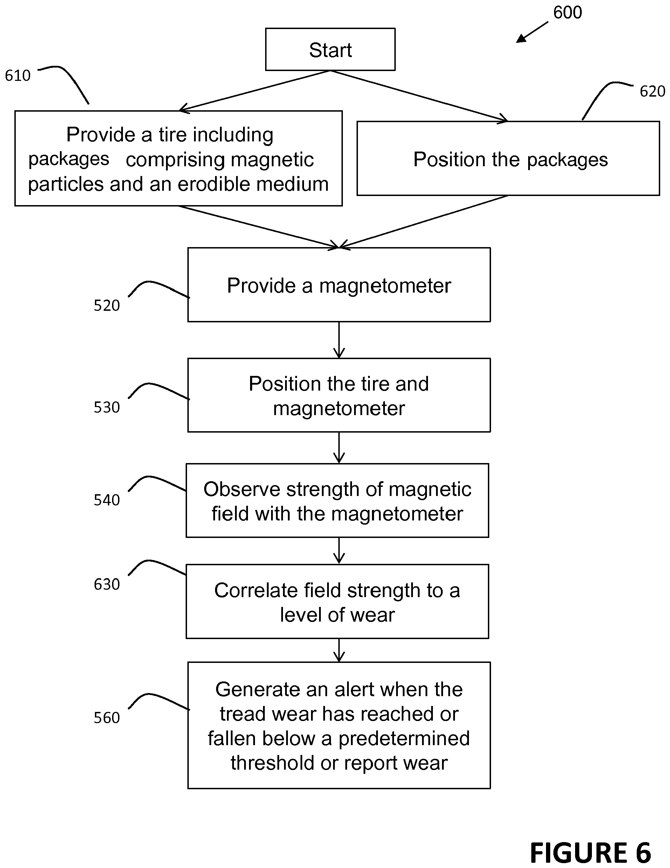

**Figure 6** is a flowchart describing one embodiment of a method for detecting tread wear in a tire including a plurality of packages comprising magnetic particles and an erodible medium. The **Figure 6** embodiment is substantially similar to the **Figure 5** embodiment, except for the differences discussed below.

As depicted in **Figure 6****,** method **600** starts with providing **610** a tire including a plurality of packages comprising magnetic particles and an erodible medium. In providing step **610,** a plurality of packages comprising magnetic particles and an erodible medium are provided within a tire tread. In one embodiment, the package is provided by being placed within, or forcibly propelled into, a slot in the tread. The slot may be created using, without limitation, a needle, cannula, blade, pin, nail, drill, or tire mold. The diameter of the slot is between 80 and 120% of the diameter of the package. Alternatively, a slot may be created using 3D printing or subtractive manufacturing. As one of ordinary skill in the art will understand, adhesives or liquid rubber may be used to fix the package within the slot.

In an alternative embodiment, the package is provided by being placed within, or forcibly propelled into, a hole. A hole may be created using, without limitation, a needle, cannula, blade, pin, nail, drill, tire mold, 3D printing, or subtractive manufacturing. In alternative embodiments, the diameter of the hole is between 120 and 200% of the diameter of the package. As one of ordinary skill in the art will understand, adhesives or liquid rubber may be used in conjunction with providing the package within the hole.

Method **600** then continues with positioning **620** the plurality of packages comprising magnetic particles and an erodible medium. In positioning step **620,** it is determined where the packages are disposed about the tread. The packages may be disposed according to the descriptions provided with regard to **Figures** 2 and 4b above.

After positioning step **620** is completed, method **600** continues with providing step **520,** positioning step **520,** and measuring step **540.**

Method **600** then continues with correlating step **630.** In correlating step **630,** the measurement is correlated **630** to a level of wear. In this step, the strength of the magnetic field is used to estimate the tread depth. Table 2, below, is an exemplary lookup table used to calculate tread wear when magnetic particles are utilized:

| **Magnetic Field (mT)** | **Tread Depth (mm)** |
|---|---|
| 8.0 | 9 |
| 6.5 | 8 |
| 5.5 | 6 |
| 4.5 | 5 |
| 4.0 | 3 |

Method 600 then concludes with generating step **560.**

As one of ordinary skill in the art would understand, the tire embodiments described in this disclosure may be configured for use on a vehicle selected from the group consisting of motorcycles, tractors, agricultural vehicles, lawnmowers, golf carts, scooters, airplanes, military vehicles, passenger vehicles, hybrid vehicles, high-performance vehicles, sport-utility vehicles, light trucks, heavy trucks, heavy-duty vehicles, and buses.

One of ordinary skill in the art would also understand that the embodiments described in this disclosure may be utilized with a variety of tread patterns, including, without limitation, symmetrical, asymmetrical, directional, studded, and stud-less tread patterns.

One of ordinary skill in the art would also understand that the embodiments described in this disclosure may be utilized, without limitation, in high-performance, winter, all-season, touring, non-pneumatic, and retread tire applications.

One of ordinary skill in the art would also understand that the embodiments described in this disclosure may be utilized in large tires. Examples of large tires include, but are not limited to, agricultural tires, mining tires, forestry tires, skid steer tires, construction tires, monster-truck tires, and other heavy-duty vehicle tires.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (*e.g.,* A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or components.

While the present disclosure has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the disclosure, in its broader aspects, is not limited to the specific details, the representative apparatus and method, and illustrative examples shown and described. Accordingly, departures may be made from such details without departing from the scope of the applicant's general inventive concept.

## Claims

1. A tire (200a, 400) comprising:
at least one annular structure configured to interface with a wheel (405);
a circumferential tread (140, 420) disposed in a crown region of the tire (200a, 400); and **characterised in that** the tire further comprises a plurality of packages having magnetic particles and an erodible medium, disposed within the circumferential tread, wherein in each package the magnetic particles are distributed along a gradient of increasing concentration, and wherein each package is a tread insert (205a, 205b, 205c, 300, 300a, 300b, 300c), each tread insert (205a, 205b, 205c, 300, 300a, 300b, 300c) having an erodible medium with magnetic particles disposed therein, wherein each tread insert (205a, 205b, 205c, 300, 300a, 300b, 300c) has a first tier (305) including magnetic particles at a first concentration, a second tier (310) including magnetic particles at a second concentration less than or equal to the first concentration, and a third tier (315) including magnetic particles at a third concentration less than the first concentration.

2. The tire (200a, 400) of claim 1, wherein the first tier (305) produces a magnetic field of 12-16 mT, the second tier (310) produces a magnetic field of 8-12 mT, and the third tier (315) produces a magnetic field of 4-8 mT.

3. The tire (200a, 400) of claim 1, wherein the first tier (305) includes magnetic particles having a concentration of 5-6 g/cm³, the second tier (310) includes magnetic particles having a concentration of 4-5 g/cm³, and the third tier (315) includes magnetic particles having a concentration of 3-4 g/cm³.

4. The tire (200a, 400) of claim 1, wherein the magnetic particles are SrFe₁₂O₁₉, amorphous Fe_{73.5}Cu₁Nb₃Si_{13.5}B₉ or Sm₂Fe₁₄B or La₂Fe₁₄B.

5. The tire (200a, 400) of claim 4, wherein the magnetic particles have a density between 3.5 and 5.1 g/cm³.

6. The tire (200a, 400) of claim 4, wherein the magnetic particles have a diameter between 0.5 and 1.0 µm.

7. The tire (200a, 400) of claim 1, wherein the plurality of tread inserts (205a, 205b, 205c, 300, 300a, 300b, 300c) are distributed about a circumference of the tire (200a, 400).

8. The tire (200a, 400) of claim 1, wherein the circumferential tread (140, 420) is a retread.

9. The tire (200a, 400) of claim 1, further comprising an RFID chip configured to record data associated with a tread-depth measurement.

10. The tire (200a, 400) of claim 1, wherein the tire (200a, 400) is a heavy duty, off-the-road, non-pneumatic, or truck-and-bus radial tire.

11. A method for detecting tread wear, comprising:
providing a tire (200a, 400) with a magnetic component, wherein the tire comprises a plurality of packages having magnetic particles and an erodible medium, disposed within the circumferential tread, wherein in each package the magnetic particles are distributed along a gradient of increasing concentration, and wherein each package is a tread insert (205a, 205b, 205c, 300, 300a, 300b, 300c), each tread insert (205a, 205b, 205c, 300, 300a, 300b, 300c) having an erodible medium with magnetic particles disposed therein, wherein each tread insert (205a, 205b, 205c, 300, 300a, 300b, 300c) has a first tier (305) including magnetic particles at a first concentration, a second tier (310) including magnetic particles at a second concentration less than or equal to the first concentration, and a third tier (315) including magnetic particles at a third concentration less than the first concentration;
providing a sensor within a measurable distance from the tire (200a, 400);
sensing a magnetic field generated by the magnetic component; and
inferring a tread depth according to the sensed magnetic field.

12. The method of claim 11, further comprising calculating a wear rate based upon at least two tread depth inferences.

13. The method of claim 11, further comprising calculating a percentage of tread wear.

14. The method of claim 11, further comprising generating an alert when the tread depth reaches a predetermined value.

15. The method of claim 11, further comprising saving data associated with a measurement to an RFID disposed on the tire.

## Patentansprüche

1. Reifen (200a, 400), umfassend:
mindestens eine ringförmige Struktur, die dazu konfiguriert ist, mit einem Rad (405) verbunden zu werden;
eine Umfangslauffläche (140, 420), die in einem Scheitelbereich des Reifens (200a, 400) angeordnet ist; und **dadurch gekennzeichnet, dass** der Reifen ferner eine Vielzahl von Paketen mit magnetischen Teilchen und einem erodierbaren Medium umfasst, die innerhalb der Umfangslauffläche angeordnet sind, wobei in jedem Paket die magnetischen Teilchen entlang eines Gradienten zunehmender Konzentration verteilt sind und wobei jedes Paket ein Laufflächeneinsatz (205a, 205b, 205c, 300, 300a, 300b, 300c) ist, wobei jeder Laufflächeneinsatz (205a, 205b, 205c, 300, 300a, 300b, 300c) ein erodierbares Medium mit darin angeordneten magnetischen Teilchen aufweist, wobei jeder Laufflächeneinsatz (205a, 205b, 205c, 300, 300a, 300b, 300c) eine erste Schicht (305) mit magnetischen Teilchen in einer ersten Konzentration, eine zweite Schicht (310) mit magnetischen Teilchen in einer zweiten Konzentration, die kleiner oder gleich der ersten Konzentration ist, und eine dritte Schicht (315) mit magnetischen Teilchen in einer dritten Konzentration aufweist, die kleiner als die erste Konzentration ist.

2. Reifen (200a, 400) nach Anspruch 1, wobei die erste Schicht (305) ein Magnetfeld von 12 bis 16 mT erzeugt, die zweite Schicht (310) ein Magnetfeld von 8 bis 12 mT erzeugt und die dritte Schicht (315) ein Magnetfeld von 4 bis 8 mT erzeugt.

3. Reifen (200a, 400) nach Anspruch 1, wobei die erste Schicht (305) magnetische Teilchen mit einer Konzentration von 5 bis 6 g/cm³ einschließt, die zweite Schicht (310) magnetische Teilchen mit einer Konzentration von 4 bis 5 g/cm³ einschließt und die dritte Schicht (315) magnetische Teilchen mit einer Konzentration von 3 bis 4 g/cm³ einschließt.

4. Reifen (200a, 400) nach Anspruch 1, wobei die magnetischen Teilchen SrFe₁₂O₁₉, amorphes Fe_{73,5}Cu₁Nb₃Si_{13,5}B₉ oder Sm₂Fe₁₄B oder La₂Fe₁₄B sind.

5. Reifen (200a, 400) nach Anspruch 4, wobei die magnetischen Teilchen eine Dichte zwischen 3,5 und 5,1 g/cm³ aufweisen.

6. Reifen (200a, 400) nach Anspruch 4, wobei die magnetischen Teilchen einen Durchmesser zwischen 0,5 und 1,0 µm aufweisen.

7. Reifen (200a, 400) nach Anspruch 1, wobei die Vielzahl von Laufflächeneinsätzen (205a, 205b, 205c, 300, 300a, 300b, 300c) über einen Umfang des Reifens (200a, 400) verteilt ist.

8. Reifen (200a, 400) nach Anspruch 1, wobei die Umfangslauffläche (140, 420) eine erneuerte Lauffläche ist.

9. Reifen (200a, 400) nach Anspruch 1, ferner umfassend einen RFID-Chip, der zum Aufzeichnen von Daten konfiguriert ist, die einer Laufflächen-Tiefenmessung zugeordnet sind.

10. Reifen (200a, 400) nach Anspruch 1, wobei der Reifen (200a, 400) ein Schwerlast-, Gelände-, nicht pneumatischer oder Lkw-und-Bus-Radialreifen ist.

11. Verfahren zum Detektieren von Laufflächenverschleiß, umfassend:
Versehen eines Reifens (200a, 400) mit einer magnetischen Komponente, wobei der Reifen eine Vielzahl von Paketen mit magnetischen Teilchen und einem erodierbaren Medium umfasst, die innerhalb der Umfangslauffläche angeordnet sind, wobei in jedem Paket die magnetischen Teilchen entlang eines Gradienten zunehmender Konzentration verteilt werden und wobei jedes Paket ein Laufflächeneinsatz (205a, 205b, 205c, 300, 300a, 300b, 300c) ist, wobei jeder Laufflächeneinsatz (205a, 205b, 205c, 300, 300a, 300b, 300c) ein erodierbares Medium mit darin angeordneten magnetischen Teilchen aufweist, wobei jeder Laufflächeneinsatz (205a, 205b, 205c, 300, 300a, 300b, 300c) eine erste Schicht (305) mit magnetischen Teilchen in einer ersten Konzentration, eine zweite Schicht (310) mit magnetischen Teilchen in einer zweiten Konzentration, die kleiner oder gleich der ersten Konzentration ist, und eine dritte Schicht (315) mit magnetischen Teilchen in einer dritten Konzentration aufweist, die kleiner als die erste Konzentration ist;
Bereitstellen eines Sensors in einem messbaren Abstand vom Reifen (200a, 400);
Erfassen eines Magnetfelds, das von der magnetischen Komponente erzeugt wird; und
Ableiten einer Laufflächentiefe gemäß dem erfassten Magnetfeld.

12. Verfahren nach Anspruch 11, ferner umfassend Berechnen einer Verschleißrate basierend auf mindestens zwei Laufflächentiefen-Ableitungen.

13. Verfahren nach Anspruch 11, ferner umfassend Berechnen eines Prozentsatzes von Laufflächenverschleiß.

14. Verfahren von Anspruch 11, ferner umfassend Erzeugen eines Alarms, wenn die Laufflächentiefe einen vorbestimmten Wert erreicht.

15. Verfahren von Anspruch 11, ferner umfassend Speichern von Daten im Zusammenhang mit einer Messung zu einem RFID, das auf dem Reifen angeordnet ist.

## Revendications

1. Pneumatique (200a, 400), comprenant :
au moins une structure annulaire conçue pour s'interfacer avec une roue (405) ;
une bande de roulement circonférentielle (140, 420) disposée dans une région de couronne du pneumatique (200a, 400) ; et **caractérisé en ce que** le pneumatique comprend en outre une pluralité d'ensembles possédant des particules magnétiques et un milieu érodable, disposés à l'intérieur de la bande de roulement circonférentielle, les particules magnétiques dans chaque ensemble étant réparties le long d'un gradient de concentration croissante, et chaque ensemble étant un insert de bande de roulement (205a, 205b, 205c, 300, 300a, 300b, 300c), chaque insert de bande de roulement (205a, 205b, 205c, 300, 300a, 300b, 300c) possédant un milieu érodable avec des particules magnétiques disposées à l'intérieur, chaque insert de bande de roulement (205a, 205b, 205c, 300, 300a, 300b, 300c) possédant un premier niveau (305) incluant des particules magnétiques à une première concentration, un deuxième niveau (310) incluant des particules magnétiques à une deuxième concentration inférieure ou égale à la première concentration, et un troisième niveau (315) incluant des particules magnétiques à une troisième concentration inférieure à la première concentration.

2. Pneumatique (200a, 400) selon la revendication 1, dans lequel le premier niveau (305) produit un champ magnétique de 12-16 mT, le deuxième niveau (310) produit un champ magnétique de 8-12 mT, et le troisième niveau (315) produit un champ magnétique de 4-8 mT.

3. Pneumatique (200a, 400) selon la revendication 1, dans lequel le premier niveau (305) inclut des particules magnétiques ayant une concentration de 5-6 g/cm³, le deuxième niveau (310) inclut des particules magnétiques ayant une concentration de 4-5 g/cm³ et le troisième niveau (315) inclut des particules magnétiques ayant une concentration de 3-4 g/cm³.

4. Pneumatique (200a, 400) selon la revendication 1, dans lequel les particules magnétiques sont du SrFe₁₂O₁₉, du Fe_{73,5}Cu₁Nb₃Si_{13,5}B₉ amorphe ou du Sm₂Fe₁₄B ou du La₂Fe₁₄B.

5. Pneumatique (200a, 400) selon la revendication 4, dans lequel les particules magnétiques ont une densité comprise entre 3,5 et 5,1 g/cm³.

6. Pneumatique (200a, 400) selon la revendication 4, dans lequel les particules magnétiques ont un diamètre compris entre 0,5 et 1,0 µm.

7. Pneumatique (200a, 400) selon la revendication 1, dans lequel la pluralité d'inserts de bande de roulement (205a, 205b, 205c, 300, 300a, 300b, 300c) est répartie autour d'une circonférence du pneumatique (200a, 400).

8. Pneumatique (200a, 400) selon la revendication 1, dans lequel la bande de roulement circonférentielle (140, 420) est un rechapage.

9. Pneumatique (200a, 400) selon la revendication 1, comprenant en outre une puce RFID conçue pour enregistrer des données associées à une mesure de profondeur de bande de roulement.

10. Pneumatique (200a, 400) selon la revendication 1, dans lequel le pneumatique (200a, 400) est un pneumatique super-résistant, tout terrain, sans air ou radial pour camion et bus.

11. Procédé de détection de l'usure de bande de roulement, comprenant :
la fourniture d'un pneumatique (200a, 400) avec un composant magnétique, le pneumatique comprenant une pluralité d'ensembles possédant des particules magnétiques et un milieu érodable, disposés à l'intérieur de la bande de roulement circonférentielle, les particules magnétiques dans chaque ensemble étant réparties le long d'un gradient de concentration croissante, et chaque ensemble étant un insert de bande de roulement (205a, 205b, 205c, 300, 300a, 300b, 300c), chaque insert de bande de roulement (205a, 205b, 205c, 300, 300a, 300b, 300c) possédant un milieu érodable avec des particules magnétiques disposées à l'intérieur, chaque insert de bande de roulement (205a, 205b, 205c, 300, 300a, 300b, 300c) possédant un premier niveau (305) incluant des particules magnétiques à une première concentration, un deuxième niveau (310) incluant des particules magnétiques à une deuxième concentration inférieure ou égale à la première concentration, et un troisième niveau (315) incluant des particules magnétiques à une troisième concentration inférieure à la première concentration ;
la fourniture d'un capteur à l'intérieur d'une distance mesurable du pneumatique (200a, 400) ;
la détection d'un champ magnétique généré par le composant magnétique ; et
la déduction d'une profondeur de bande de roulement selon le champ magnétique détecté.

12. Procédé selon la revendication 11, comprenant en outre le calcul d'un taux d'usure en fonction d'au moins deux déductions de profondeur de bande de roulement.

13. Procédé selon la revendication 11, comprenant en outre le calcul d'un pourcentage d'usure de bande de roulement.

14. Procédé selon la revendication 11, comprenant en outre la génération d'une alerte lorsque la profondeur de bande de roulement atteint une valeur prédéterminée.

15. Procédé selon la revendication 11, comprenant en outre l'enregistrement de données associées à une mesure dans une puce RFID disposée sur le pneumatique.
